# EUROPEAN PATENT APPLICATION

(11) **EP 4 528 622 A1**
(43) Date of publication of application: **26.03.2025**
(21) Application number: 23829952.3
(22) Date of filing: 14.06.2023
(51) Int. Cl.: G06Q 30/02

(54) **ADVERTISEMENT ATTRIBUTION SYSTEM, METHOD AND APPARATUS**

(30) Priority: 28.06.2022 CN 202210738938
(71) Applicant: Huawei Technologies Co., Ltd., Shenzhen, Guangdong 518129 (CN)
(72) Inventor: LI, Chenyu, Shenzhen, Guangdong 518129 (CN); DING, Jiangwei, Shenzhen, Guangdong 518129 (CN)
(74) Representative: Körber, Martin Hans
(86) International application number: PCT/CN2023/100083
(87) International publication number: WO 2024/001770

(57) **Abstract**

This application provides an advertisement attribution system, method, and apparatus. When an electronic device displays an advertisement and a user interacts with the advertisement, the electronic device may separately send advertisement interaction information and an open identifier to a first server, and after a first application is installed, may send advertisement conversion information and the open identifier to a second server. Then the second server requests the advertisement interaction information from the first server, and performs advertisement attribution based on the advertisement interaction information and the advertisement conversion information. Based on the open identifier provided in this application, when an advertiser application cannot obtain an open anonymous device identifier, advertisement attribution can be performed by using the open identifier, thereby ensuring user privacy.

## Description

This application claims priority to Chinese Patent Application No. 202210738938.8, filed with the China National Intellectual Property Administration on June 28, 2022 and entitled "ADVERTISEMENT ATTRIBUTION SYSTEM, METHOD, AND APPARATUS", which is incorporated herein by reference in its entirety.

### TECHNICAL FIELD

This application relates to the field of electronic devices, and more specifically, to an advertisement attribution system, method, and apparatus.

### BACKGROUND

When advertisement attribution is performed, an advertiser application needs to obtain an open anonymous device identifier (open anonymous device identifier, OAID) of an electronic device. However, with increasing attention and protection for user privacy, the advertiser application may not be able to obtain the OAID of the electronic device. As a result, an advertiser cannot perform advertisement attribution. In addition, different advertisers may exchange OAIDs of different electronic devices with each other after obtaining the OAIDs of different electronic devices. This is unfavorable to user privacy protection.

### SUMMARY

Embodiments of this application provide an advertisement attribution system, method, and apparatus, and provide a new identifier used for advertisement attribution, so that when an advertiser application cannot obtain an OAID, the new identifier may be used to perform advertisement attribution. Different advertisers can only use identifiers corresponding to the advertisers to perform advertisement attribution, but cannot exchange identifiers with each other, so that user privacy is ensured.

According to a first aspect, a system is provided, where the system includes an electronic device, a first server, and a second server, and the second server is a server corresponding to a first application, where the electronic device displays content of a first advertisement, where the content of the first advertisement is related to the first application; the electronic device sends first advertisement interaction information and an open identifier to the first server, where the open identifier is generated based on a device identifier of the electronic device and an advertiser identifier, and the advertiser identifier is associated with the first advertisement; the electronic device installs the first application; the electronic device sends advertisement conversion information and the open identifier to the second server; the second server requests advertisement interaction information from the first server, where the advertisement interaction information includes the first advertisement interaction information; the first server sends the advertisement interaction information to the second server; and the second server performs advertisement attribution based on the advertisement interaction information and the advertisement conversion information.

For example, the first server may be an advertisement platform server, and the second server may be an advertiser server.

In this embodiment of this application, a new OPENID used for advertisement attribution is provided, so that when an advertiser application cannot obtain an OAID, the OPENID may be used to perform advertisement attribution. The OPENID is generated based on the device ID and the advertiser ID, and is different from the OAID. The OPENID provided in this embodiment of this application is different for different advertisements. Therefore, different advertisers can only use the OPENID to perform advertisement attribution, but cannot exchange identifiers with each other, so that user privacy is ensured.

With reference to the first aspect, in some implementations of the first aspect, after the first application is installed on the electronic device, when the electronic device runs the first application, the electronic device sends the advertisement conversion information and the open identifier to the second server.

With reference to the first aspect, in some implementations of the first aspect, the electronic device includes an advertisement module, and that the electronic device displays content of a first advertisement includes: The electronic device obtains first advertisement information from the first server by using the advertisement module, where the first advertisement information includes the content of the first advertisement and the advertiser identifier; and the electronic device displays the content of the first advertisement based on the first advertisement information.

With reference to the first aspect, in some implementations of the first aspect, the advertisement module is a third-party advertisement module.

With reference to the first aspect, in some implementations of the first aspect, the electronic device includes a management module, and before the electronic device sends the first advertisement interaction information and the open identifier to the first server, the electronic device obtains the device identifier of the electronic device and the advertiser identifier by using the management module, and generates the open identifier by using the management module.

With reference to the first aspect, in some implementations of the first aspect, the second server sends an advertisement attribution result to the first server.

With reference to the first aspect, in some implementations of the first aspect, the open identifier is generated based on the device identifier of the electronic device and the advertiser identifier by using an encryption algorithm.

With reference to the first aspect, in some implementations of the first aspect, that the electronic device installs the first application includes:
The electronic device obtains an installation package of the first application and installs the first application in response to an operation of tapping the first advertisement by a user.

With reference to the first aspect, in some implementations of the first aspect, the installation package of the first application includes the advertiser identifier.

With reference to the first aspect, in some implementations of the first aspect, the electronic device displays the content of the first advertisement in at least one of the following manners: The electronic device displays the content of the first advertisement on a leftmost screen; the electronic device displays the content of the first advertisement on a startup interface of a second application; the electronic device displays the content of the first advertisement on a pause interface during video play; the electronic device displays the content of the first advertisement on a pop-up interface; the electronic device displays the content of the first advertisement on an application store interface; the electronic device displays the content of the first advertisement on an application recommendation interface; and the electronic device displays the content of the first advertisement by using a use interface of a third application.

According to a second aspect, an advertisement attribution method is provided, where the method is applied to an electronic device, and the method includes: The electronic device displays content of a first advertisement, where the content of the first advertisement is related to a first application; the electronic device sends first advertisement interaction information and an open identifier to a first server, where the open identifier is generated based on a device identifier of the electronic device and an advertiser identifier, and the advertiser identifier is associated with the first advertisement; the electronic device installs the first application; and the electronic device sends advertisement conversion information and the open identifier to a second server, where the advertisement conversion information and the first advertisement interaction information are used to perform advertisement attribution.

For example, the first server may be an advertisement platform server, and the second server may be an advertiser server.

In this embodiment of this application, a new OPENID used for advertisement attribution is provided, so that when an advertiser application cannot obtain an OAID, the OPENID may be used to perform advertisement attribution. The OPENID is generated based on the device ID and the advertiser ID, and is different from the OAID. The OPENID provided in this embodiment of this application is different for different advertisements. Therefore, different advertisers can only use the OPENID to perform advertisement attribution, but cannot exchange identifiers with each other, so that user privacy is ensured.

With reference to the second aspect, in some implementations of the second aspect, after the electronic device installs the first application, when the electronic device runs the advertiser application, the electronic device sends the advertisement conversion information and the open identifier to the second server.

With reference to the second aspect, in some implementations of the second aspect, the electronic device includes an advertisement module, and that the electronic device displays content of a first advertisement includes: The electronic device obtains first advertisement information from the first server by using the advertisement module, where the first advertisement information includes the content of the first advertisement and the advertiser identifier; and the electronic device displays the content of the first advertisement based on the first advertisement information.

With reference to the second aspect, in some implementations of the second aspect, the advertisement module is a third-party advertisement module.

With reference to the second aspect, in some implementations of the second aspect, the electronic device includes a management module, and before the electronic device sends the first advertisement interaction information and the open identifier to the first server, the method further includes: The electronic device obtains the device identifier of the electronic device and the advertiser identifier by using the management module, and generates the open identifier by using the management module.

With reference to the second aspect, in some implementations of the second aspect, the open identifier is generated based on the device identifier of the electronic device and the advertiser identifier by using an encryption algorithm.

With reference to the second aspect, in some implementations of the second aspect, that the electronic device installs the first application includes: The electronic device obtains an installation package of the first application and installs the first application in response to an operation of tapping the first advertisement by a user.

With reference to the second aspect, in some implementations of the second aspect, the installation package of the first application includes the advertiser identifier.

With reference to the second aspect, in some implementations of the second aspect, the electronic device displays the content of the first advertisement in at least one of the following manners: The electronic device displays the content of the first advertisement on a leftmost screen; the electronic device displays the content of the first advertisement on a startup interface of a second application; the electronic device displays the content of the first advertisement on a pause interface during video play; the electronic device displays the content of the first advertisement on a pop-up interface; the electronic device displays the content of the first advertisement on an application store interface; the electronic device displays the content of the first advertisement on an application recommendation interface; and the electronic device displays the content of the first advertisement by using a use interface of a third application.

According to a third aspect, a system is provided, where the system includes an electronic device, a first server, and a second server, and the second server is a server corresponding to a first application, where the electronic device displays content of a first advertisement, where the content of the first advertisement is related to the first application; the electronic device sends first advertisement interaction information and an open identifier to the first server, where the open identifier is generated based on a device identifier of the electronic device and an advertiser identifier, and the advertiser identifier is associated with the first advertisement; the electronic device installs the first application; the electronic device sends advertisement conversion information and the open identifier to the second server; the second server sends the advertisement conversion information to the first server; the first server performs advertisement attribution based on the first advertisement interaction information and the advertisement conversion information; and the first server sends an advertisement attribution result to the second server.

For example, the first server may be an advertisement platform server, and the second server may be an advertiser server.

In this embodiment of this application, a new OPENID used for advertisement attribution is provided, so that when an advertiser application cannot obtain an OAID, the OPENID may be used to perform advertisement attribution. The OPENID is generated based on the device ID and the advertiser ID, and is different from the OAID. The OPENID provided in this embodiment of this application is different for different advertisements. Therefore, different advertisers can only use the OPENID to perform advertisement attribution, but cannot exchange identifiers with each other, so that user privacy is ensured.

With reference to the third aspect, in some implementations of the third aspect, after the first application is installed on the electronic device, when the electronic device runs the first application, the electronic device sends the advertisement conversion information and the open identifier to the second server.

With reference to the third aspect, in some implementations of the third aspect, the electronic device includes an advertisement module, and that the electronic device displays content of a first advertisement includes: The electronic device obtains first advertisement information from the first server by using the advertisement module, where the first advertisement information includes the content of the first advertisement and the advertiser identifier; and the electronic device displays the content of the first advertisement based on the first advertisement information.

With reference to the third aspect, in some implementations of the third aspect, the advertisement module is a third-party advertisement module.

With reference to the third aspect, in some implementations of the third aspect, the electronic device includes a management module, and before the electronic device sends the first advertisement interaction information and the open identifier to the first server, the electronic device obtains the device identifier of the electronic device and the advertiser identifier by using the management module, and generates the open identifier by using the management module.

With reference to the third aspect, in some implementations of the third aspect, the second server sends the advertisement attribution result to the first server.

With reference to the third aspect, in some implementations of the third aspect, the open identifier is generated based on the device identifier of the electronic device and the advertiser identifier by using an encryption algorithm.

With reference to the third aspect, in some implementations of the third aspect, that the electronic device installs the first application includes:
The electronic device obtains an installation package of the first application and installs the first application in response to an operation of tapping the first advertisement by a user.

With reference to the third aspect, in some implementations of the third aspect, the installation package of the first application includes the advertiser identifier.

With reference to the third aspect, in some implementations of the third aspect, the electronic device displays the content of the first advertisement in at least one of the following manners: The electronic device displays the content of the first advertisement on a leftmost screen; the electronic device displays the content of the first advertisement on a startup interface of a second application; the electronic device displays the content of the first advertisement on a pause interface during video play; the electronic device displays the content of the first advertisement on a pop-up interface; the electronic device displays the content of the first advertisement on an application store interface; and the electronic device displays the content of the first advertisement on an application recommendation interface.

According to a fourth aspect, a system is provided, where the system includes an electronic device, a first server, and a second server, and the second server is a server corresponding to a first application, where the electronic device displays content of a first advertisement, where the content of the first advertisement is related to the first application; the electronic device sends first advertisement interaction information and a device identifier of the electronic device to the first server; the electronic device installs the first application; the electronic device sends advertisement conversion information and the open identifier to the second server, where the open identifier is generated based on the device identifier of the electronic device and an advertiser identifier, and the advertiser identifier is associated with the first advertisement; the second server generates the open identifier based on the advertiser identifier and the device identifier; the second server requests advertisement interaction information from the first server, where the advertisement interaction information includes the first advertisement interaction information; the first server sends the advertisement interaction information to the second server; and the second server performs advertisement attribution based on the advertisement interaction information and the advertisement conversion information.

For example, the first server may be an advertisement platform server, and the second server may be an advertiser server.

In this embodiment of this application, a new OPENID used for advertisement attribution is provided, so that when an advertiser application cannot obtain an OAID, the OPENID may be used to perform advertisement attribution. The OPENID is generated based on the device ID and the advertiser ID, and is different from the OAID. The OPENID provided in this embodiment of this application is different for different advertisements. Therefore, different advertisers can only use the OPENID to perform advertisement attribution, but cannot exchange identifiers with each other, so that user privacy is ensured.

With reference to the fourth aspect, in some implementations of the fourth aspect, after the first application is installed on the electronic device, when the electronic device runs the first application, the electronic device sends the advertisement conversion information and the open identifier to the second server.

With reference to the fourth aspect, in some implementations of the fourth aspect, the electronic device includes an advertisement module, and that the electronic device displays content of a first advertisement includes: The electronic device obtains first advertisement information from the first server by using the advertisement module, where the first advertisement information includes the content of the first advertisement and the advertiser identifier; and the electronic device displays the content of the first advertisement based on the first advertisement information.

With reference to the fourth aspect, in some implementations of the fourth aspect, the advertisement module is a third-party advertisement module.

With reference to the fourth aspect, in some implementations of the fourth aspect, the electronic device includes a management module, and before the electronic device sends the first advertisement conversion information and the open identifier to the second server, the electronic device obtains the device identifier of the electronic device and the advertiser identifier by using the management module, and generates the open identifier by using the management module.

With reference to the fourth aspect, in some implementations of the fourth aspect, the second server sends an advertisement attribution result to the first server.

With reference to the fourth aspect, in some implementations of the fourth aspect, the open identifier is generated based on the device identifier of the electronic device and the advertiser identifier by using an encryption algorithm.

With reference to the fourth aspect, in some implementations of the fourth aspect, that the electronic device installs the first application includes:
The electronic device obtains an installation package of the first application and installs the first application in response to an operation of tapping the first advertisement by a user.

With reference to the fourth aspect, in some implementations of the fourth aspect, the installation package of the first application includes the advertiser identifier.

With reference to the fourth aspect, in some implementations of the fourth aspect, the electronic device displays the content of the first advertisement in at least one of the following manners: The electronic device displays the content of the first advertisement on a leftmost screen; the electronic device displays the content of the first advertisement on a startup interface of a second application; the electronic device displays the content of the first advertisement on a pause interface during video play; the electronic device displays the content of the first advertisement on a pop-up interface; the electronic device displays the content of the first advertisement on an application store interface; and the electronic device displays the content of the first advertisement on an application recommendation interface.

A fifth aspect provides an electronic device according to an embodiment of this application. The electronic device includes modules/units that perform the method according to any one of the foregoing aspects or the possible designs of the foregoing aspects. These modules/units may be implemented by hardware, or may be implemented by hardware executing corresponding software.

A sixth aspect provides a chip according to an embodiment of this application. The chip is coupled to a memory in an electronic device, and is configured to: invoke a computer program stored in the memory and perform the technical solutions according to any one of the foregoing aspects and the possible designs of the foregoing aspects in embodiments of this application. "Coupling" in embodiments of this application means that two components are directly or indirectly combined with each other.

A seventh aspect provides a computer-readable storage medium according to an embodiment of this application. The computer-readable storage medium includes a computer program. When the computer program runs on an electronic device, the electronic device is enabled to perform the technical solutions according to any one of the foregoing aspects and the possible designs of the foregoing aspects.

An eighth aspect provides a computer program according to an embodiment of this application. The computer program includes instructions. When the instructions are run on a computer, the computer is enabled to perform the technical solutions according to any one of the foregoing aspects and the possible designs of the foregoing aspects.

A ninth aspect provides a graphical user interface on an electronic device according to an embodiment of this application. The electronic device has a display, one or more memories, and one or more processors. The one or more processors are configured to execute one or more computer programs stored in the one or more memories. The graphical user interface includes a graphical user interface displayed when the electronic device performs the technical solutions according to any one of the foregoing aspects and the possible designs of the foregoing aspects.

For beneficial effects of the fifth aspect to the ninth aspect, refer to the beneficial effects of the foregoing aspects. Details are not described again.

### BRIEF DESCRIPTION OF DRAWINGS

FIG. 1 is a system according to an embodiment of this application;
FIG. 2 is a diagram of a structure of an electronic device according to an embodiment of this application;
FIG. 3 is a block diagram of a software structure of an electronic device according to an embodiment of this application;
FIG. 4 is a schematic flowchart of an advertisement attribution method;
FIG. 5 is a diagram of interaction of an advertisement attribution method;
FIG. 6(a) to FIG. 6(g) are a group of GUIs according to an embodiment of this application;
FIG. 7 is a schematic flowchart of an advertisement attribution method according to an embodiment of this application;
FIG. 8 is a diagram of interaction of an advertisement attribution method according to an embodiment of this application;
FIG. 9 is a schematic flowchart of another advertisement attribution method according to an embodiment of this application;
FIG. 10 is a diagram of a system interaction method according to an embodiment of this application;
FIG. 11 is a diagram of a system interaction method according to an embodiment of this application;
FIG. 12 is a schematic flowchart of an advertisement attribution method according to an embodiment of this application; and
FIG. 13 is a diagram of composition of an electronic device according to an embodiment of this application.

### DESCRIPTION OF EMBODIMENTS

Terms used in the following embodiments are merely intended to describe specific embodiments, but are not intended to limit this application. As used in the specification and the appended claims of this application, the singular expressions "one", "a", "the", "the foregoing", "said", and "this" are intended to also include expressions such as "one or more", unless explicitly indicated to the contrary in the context. It should be further understood that in the following embodiments of this application, "at least one" and "one or more" mean one, two, or more than two. The term "and/or" is used for describing an association relationship between associated objects, and indicates that three relationships may exist. For example, A and/or B may represent: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

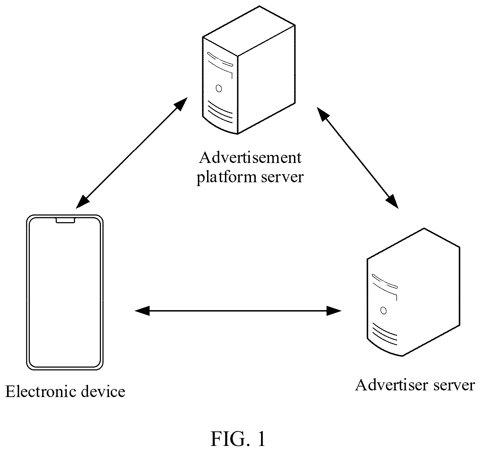

FIG. 1 is a diagram of an architecture of a system 100 to which embodiments of this application are applicable.

The system 100 may include an electronic device, an advertisement platform server, and an advertiser server. For example, as shown in FIG. 1, the electronic device, the advertisement platform server, and a server corresponding to an application may communicate with each other. The electronic device may send advertisement interaction information such as advertisement exposure information and advertisement tap information, and an open identifier (open identifier, OPENID) to the advertisement platform server. In embodiments of this application, in a scenario of promoting an application, the server corresponding to the application may be referred to as the advertiser server. In other words, during advertisement attribution, the server corresponding to the application may be referred to as the advertiser server, and the application may be referred to as an advertiser application. The electronic device may further send conversion information of the advertiser application and the corresponding OPENID to the advertiser server. The advertiser server may request the advertisement interaction information (for example, the advertisement exposure information, the advertisement tap information, or advertisement close information) from the advertisement platform server. The advertisement platform server may send the advertisement interaction information to the advertiser server, and the advertiser server may perform advertisement attribution. For descriptions of the OPENID, refer to the following text.

The following describes an electronic device, a user interface used for the electronic device, and embodiments used for using the electronic device. In some embodiments, the electronic device may be a portable electronic device that further includes another function such as a personal digital assistant function and/or a music player function, for example, a mobile phone, a tablet computer, or a wearable electronic device (for example, a smartwatch) that has a wireless communication function. An example embodiment of the portable electronic device includes but is not limited to a portable electronic device provided with iOS^{®}, Android^{®}, Microsoft^{®}, or another operating system. The portable electronic device may alternatively be another portable electronic device, for example, a laptop (laptop) or the like. It should be further understood that, in some other embodiments, the foregoing electronic device may alternatively not be the portable electronic device but a desktop computer.

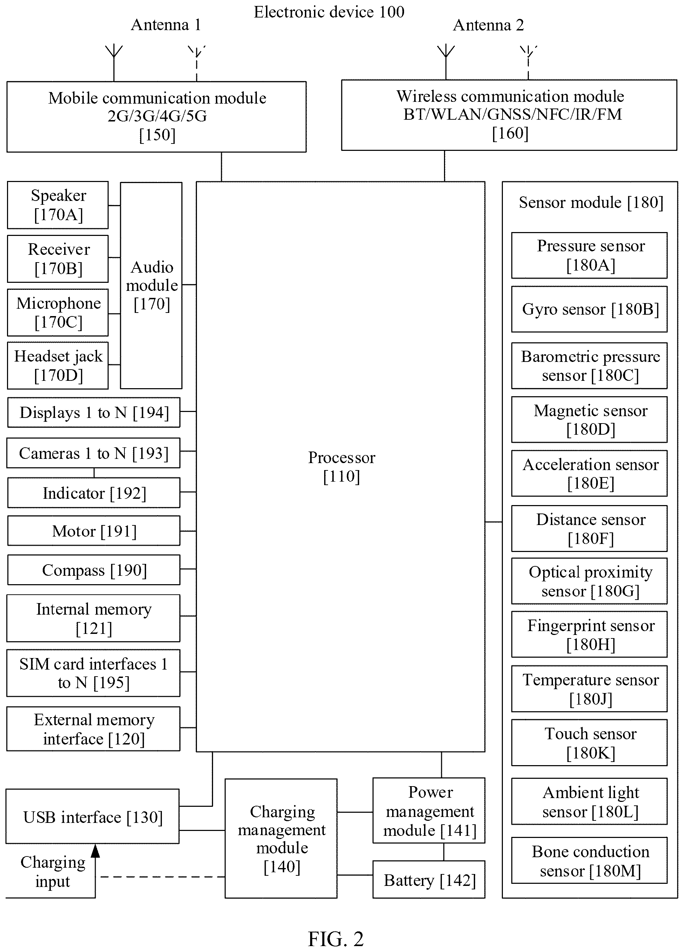

For example, FIG. 2 is a diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a compass 190, a motor 191, an indicator 192, a camera 193, a display 194, a subscriber identity module (subscriber identity module, SIM) card interface 195, and the like.

It may be understood that, the structure shown in this embodiment of this application does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors. In some embodiments, the electronic device 100 may alternatively include one or more processors 110. The controller may generate an operation control signal based on instruction operation code and a timing signal, to control instruction fetching and instruction execution. In some other embodiments, a memory may further be disposed in the processor 110, to store instructions and data. For example, the memory in the processor 110 may be a cache. The memory may store instructions or data that has just been used or cyclically used by the processor 110. If the processor 110 needs to use the instructions or the data again, the processor may directly invoke the instructions or the data from the memory. This avoids repeated access and reduces a waiting time of the processor 110, so as to improve data processing or instruction execution efficiency of the electronic device 100.

In some embodiments, the processor 110 may include one or more interfaces. The interfaces may include an inter-integrated circuit (inter-integrated circuit, 12C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, a USB interface, and/or the like. The USB interface 130 is an interface that conforms to a USB standard specification, and may be specifically a Mini USB interface, a Micro USB interface, a USB Type-C interface, or the like. The USB interface 130 may be configured to connect to a charger to charge the electronic device 100, or may be configured to transmit data between the electronic device 100 and a peripheral device. The USB interface 130 may alternatively be configured to: connect to a headset, and play audio by using the headset.

It may be understood that the interface connection relationship between the modules that is shown in this embodiment of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger by using the USB interface 130. In some embodiments of wireless charging, the charging management module 140 may receive a wireless charging input by using a wireless charging coil of the electronic device 100. The charging management module 140 may further supply power to the electronic device by using the power management module 141 while charging the battery 142.

The power management module 141 is configured to connect to the battery 142, the charging management module 140, and the processor 110. The power management module 141 receives an input of the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage and impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, an antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and transmit the electromagnetic wave to the modem processor for demodulation. The mobile communication module 150 may further amplify a signal modulated by the modem processor, and convert the signal into an electromagnetic wave for radiation by using the antenna 1. In some embodiments, at least some functional modules in the mobile communication module 150 may be disposed in the processor 110. In some embodiments, at least some functional modules of the mobile communication module 150 may be disposed in a same component as at least some modules of the processor 110.

The wireless communication module 160 may provide a solution applied to the electronic device 100 for wireless communication including wireless local area networks (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave by using the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the to-be-sent signal, and convert the signal into an electromagnetic wave for radiation by using the antenna 2.

The electronic device 100 implements a display function by using the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flex light-emitting diode (flex light-emitting diode, FLED), a Miniled, a MicroLed, a Micro-oLed, a quantum dot light-emitting diode (quantum dot light-emitting diodes, QLED), or the like. In some embodiments, the electronic device 100 may include one or more displays 194.

In some embodiments of this application, the display 194 in FIG. 2 is bendable when the display panel is made of a material such as an OLED, an AMOLED, or a FLED. Herein, that the display 194 is bendable means that the display can be bent to any angle at any part, and can be held at the angle. For example, the display 194 can be folded left and right from the middle, or can be folded up and down from the middle.

The display 194 of the electronic device 100 may be a flexible display. Currently, the flexible display attracts much attention due to unique features and huge potential of the flexible display. Compared with a conventional display, the flexible display has features of high flexibility and bendability, and can provide a user with a new bendability-based interaction mode, to satisfy more requirements of the user on the electronic device. For an electronic device configured with a foldable display, the foldable display of the electronic device may be switched between a small screen in a folded form and a large screen in an unfolded form at any time. Therefore, the user uses a split-screen function more frequently on the electronic device provided with the foldable display.

The electronic device 100 may implement a shooting function by using the ISP, the camera 193, the video codec, the GPU, the display 194, the application processor, and the like.

The ISP is configured to process data fed back by the camera 193. For example, when photographing is performed, a shutter is opened, light is transmitted to a camera photosensitive element through a lens, an optical signal is converted into an electrical signal, and the camera photosensitive element transmits the electrical signal to the ISP for processing, and the electrical signal is converted into an image visible to naked eyes. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated by using the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts the optical signal into the electrical signal, and then transmits the electrical signal to the ISP for conversion into a digital image signal. The ISP outputs the digital image signal to the DSP for processing. The DSP converts the digital image signal into an image signal in a standard format such as RGB or YUV. In some embodiments, the electronic device 100 may include one or more cameras 193.

The digital signal processor is configured to process a digital signal, and may process another digital signal in addition to the digital image signal. For example, when the electronic device 100 performs frequency selection, the digital signal processor is configured to perform Fourier transform and the like on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG) 1, MPEG 2, MPEG 3, and MPEG 4.

The NPU is a neural-network (neural-network, NN) computing processor. By drawing on a structure of a biological neural network, for example, by drawing on a transmission mode between human brain neurons, the NPU quickly processes input information, and may further continuously perform self-learning. An application such as intelligent cognition, for example, image recognition, facial recognition, speech recognition, or text understanding of the electronic device 100 may be implemented by using the NPU.

The external memory interface 120 may be configured to connect to an external memory card, for example, a Micro SD card, to expand a storage capability of the electronic device 100. The external memory card communicates with the processor 110 by using the external memory interface 120, to implement a data storage function. For example, files such as music and a video are stored in the external memory card.

The internal memory 121 may be configured to store one or more computer programs, and the one or more computer programs include instructions. The processor 110 may run the instructions stored in the internal memory 121, so that the electronic device 100 performs the methods provided in some embodiments of this application, various applications, data processing, and the like. The internal memory 121 may include a program storage area and a data storage area. The program storage area may store an operating system. The program storage area may further store one or more applications (for example, Gallery and Contacts), and the like. The data storage area may store data (for example, photos and contacts) created during use of the electronic device 100, and the like. In addition, the internal memory 121 may include a high-speed random access memory, or may include a non-volatile memory, for example, one or more magnetic disk storage components, a flash memory component, or a universal flash storage (universal flash storage, UFS). In some embodiments, the processor 110 may run the instructions stored in the internal memory 121 and/or the instructions stored in the memory that is disposed in the processor 110, to enable the electronic device 100 to perform the method provided in embodiments of this application, other applications, and data processing. The electronic device 100 may implement an audio function, for example, music playing and recording, by using the audio module 170, the speaker 170A, the receiver 170B, the microphone 170C, the headset jack 170D, the application processor, and the like.

The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The pressure sensor 180A is configured to sense a pressure signal, and may convert the pressure signal into an electrical signal. In some embodiments, the pressure sensor 180A may be disposed on the display 194. There are many types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a capacitance change. When a touch operation is performed on the display 194, the electronic device 100 detects intensity of the touch operation by using the pressure sensor 180A. The electronic device 100 may also calculate a touch position based on a detection signal of the pressure sensor 180A. In some embodiments, touch operations performed at a same touch position but having different touch operation intensity may correspond to different operation instructions. For example, when a touch operation whose touch operation intensity is less than a first pressure threshold is performed on an icon of the application Messages, an instruction for viewing a short message service message is executed. When a touch operation whose touch operation intensity is greater than or equal to the first pressure threshold is performed on the icon of the application Messages, an instruction for creating a new short message service message is executed.

The gyro sensor 180B may be configured to determine a motion posture of the electronic device 100. In some embodiments, an angular velocity of the electronic device 100 around three axes (that is, axes X, Y, and Z) may be determined by using the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may also be configured to: navigate and sense a game scene.

The acceleration sensor 180E may detect magnitudes of accelerations of the electronic device 100 in various directions (generally three axes). When the electronic device 100 is still, a magnitude and a direction of gravity may be detected. The acceleration sensor 180E may be further configured to recognize a posture of the electronic device, and is used in an application such as switching between a landscape mode and a portrait mode or a pedometer.

The ambient light sensor 180L is configured to sense luminance of ambient light. The electronic device 100 may adaptively adjust luminance of the display 194 based on the sensed luminance of the ambient light. The ambient light sensor 180L may also be configured to automatically adjust white balance during photographing. The ambient light sensor 180L may further cooperate with the optical proximity sensor 180G to detect whether the electronic device 100 is in a pocket, to prevent an accidental touch.

The fingerprint sensor 180H is configured to acquire a fingerprint. The electronic device 100 may implement, by using an acquired fingerprint characteristic, fingerprint unlocking, accessing an application lock, fingerprint photographing, answering an incoming call by using a fingerprint, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 reduces performance of a processor near the temperature sensor 180J, to reduce power consumption and implement thermal protection. In some other embodiments, when the temperature is less than another threshold, the electronic device 100 heats the battery 142 to prevent the electronic device 100 from being shut down abnormally due to a low temperature. In some other embodiments, when the temperature is less than still another threshold, the electronic device 100 boosts an output voltage of the battery 142, to avoid abnormal shutdown caused by a low temperature.

The touch sensor 180K is also referred to as a "touch panel". The touch sensor 180K may be disposed on the display 194, and the touch sensor 180K and the display 194 form a touchscreen, also referred to as a "touch screen". The touch sensor 180K is configured to detect a touch operation acting on or near the touch sensor 180K. The touch sensor may transfer the detected touch operation to the application processor, to determine a touch event type. A visual output related to the touch operation may be provided by using the display 194. In some other embodiments, the touch sensor 180K may alternatively be disposed on a surface of the electronic device 100, and at a position different from that of the display 194.

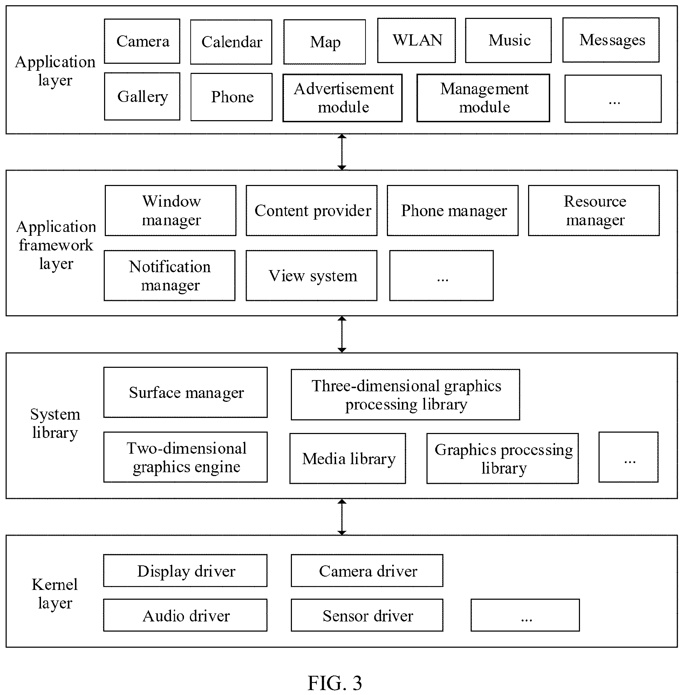

FIG. 3 is a block diagram of a software structure of an electronic device 100 according to an embodiment of this application. In a layered architecture, software is divided into several layers, and each layer has a clear role and task. The layers communicate with each other by using a software interface. In some embodiments, an Android system is divided into four layers, which are respectively an application layer, an application framework layer, an Android runtime (Android runtime) and a system library, and a kernel layer from top to bottom. The application layer may include a series of application packages.

As shown in FIG. 3, the application package may include Camera, Gallery, Calendar, Phone, Map, Navigation, WLAN, Bluetooth, Music, Video, Messages, an advertisement module, a management module, and the like.

The advertisement module is configured to perform advertisement interaction with a user. The advertisement module may be a module preset in an operating system, and the advertisement module and the electronic device may be provided by a same manufacturer.

The management module is configured to generate the OPENID based on an advertiser ID and a device ID, where the management module may be a module preset in the operating system, and the management module and the electronic device may be provided by a same manufacturer.

The application framework layer provides an application programming interface (application programming interface, API) and a programming framework for an application at the application layer, and the application framework layer includes some predefined functions.

As shown in FIG. 3, the application framework layer may include a window manager, a content provider, a view system, a phone manager, a resource manager, a notification manager, and the like.

The window manager is configured to manage a window program. The window manager may obtain a size of the display, determine whether there is a status bar, lock the screen, capture the screen, and the like.

The content provider is configured to: store and obtain data, and enable the data to be accessible by an application. The data may include a video, an image, audio, calls made and answered, a browse history and a bookmark, a personal address book, and the like.

The view system includes a visual control, for example, a control for displaying a text or a control for displaying a picture. The view system may be configured to construct an application. A display interface may include one or more views. For example, a display interface including a notification icon of Messages may include a text display view and a picture display view.

The phone manager is configured to provide a communication function for the electronic device 100, for example, call status management (including call connection and disconnection, and the like).

The resource manager provides various resources for an application, such as a localized string, an icon, a picture, a layout file, and a video file.

The notification manager enables an application to display, in the status bar, notification information, which may be used for conveying a notification-type message that may automatically disappear after a short stay without user interaction. For example, the notification manager is configured to: notify download completion, provide a message prompt, and the like. The notification manager may alternatively be a notification that appears in a top status bar of the system in a form of a chart or scroll bar text, for example, a notification of an application running on the background or a notification that appears on the screen in a form of a dialog window. For example, text information is prompted in the status bar, a prompt tone is issued, an electronic device vibrates, or an indicator flashes.

The system library may include a plurality of functional modules, for example, a surface manager (surface manager), media libraries (media libraries), a three-dimensional graphics processing library (for example, an OpenGL ES), a 2D graphics engine (for example, an SGL), and the like.

The surface manager is configured to: manage a display subsystem, and provide a fusion of 2D and 3D layers for a plurality of applications.

The media library supports playback and recording of a plurality of common audio and video formats, a still image file, and the like. The media library may support a plurality of audio and video encoding formats, for example, MPEG 4, H.264, MP3, AAC, AMR, JPG, and PNG.

The three-dimensional graphics processing library is configured to implement three-dimensional graphics drawing, image rendering and synthesis, layer processing, and the like.

The 2D graphics engine is a drawing engine for 2D drawing.

The kernel layer is a layer between hardware and software. The kernel layer includes at least a display driver, a camera driver, an audio driver, and a sensor driver.

Before embodiments of this application are described, concepts related to embodiments of this application are first described.

Advertisement attribution: used to determine attribution of conversion effect after an advertisement is exposed in a plurality of media channels, determine attribution of conversion effect after different advertisements are exposed in a same media channel, and determine attribution of conversion effect after different advertisements are exposed in different media channels. The media channel may be understood as a path for exposing an advertisement. For example, the media channel may be an application. Through advertisement attribution, an advertiser may determine conversion effect of an advertisement after exposure in different media channels and determine attribution of conversion effect of different advertisements after exposure in a same media channel, so that advertising can be performed in a targeted manner based on an attribution result. For example, an advertiser #1 advertises on both an application #1 and an application #2 to promote an application #3, and when using the application #1, a user browses the advertisement, taps the advertisement, and downloads and installs the application #3. For the foregoing process in which the user downloads and installs the application #3, during advertisement attribution, a reason why the user downloads and installs the application #3 may be attributed to that the user taps the advertisement in the application #1. In the foregoing example, displaying the advertisement by the application #1 and the application #2 may be referred to as an advertisement exposure event, tapping the advertisement by the user may be referred to as an advertisement tap event, the advertisement exposure event and the advertisement tap event may be collectively referred to as advertisement interaction, and downloading and installing the application #3 by the user is referred to as an advertisement conversion event.

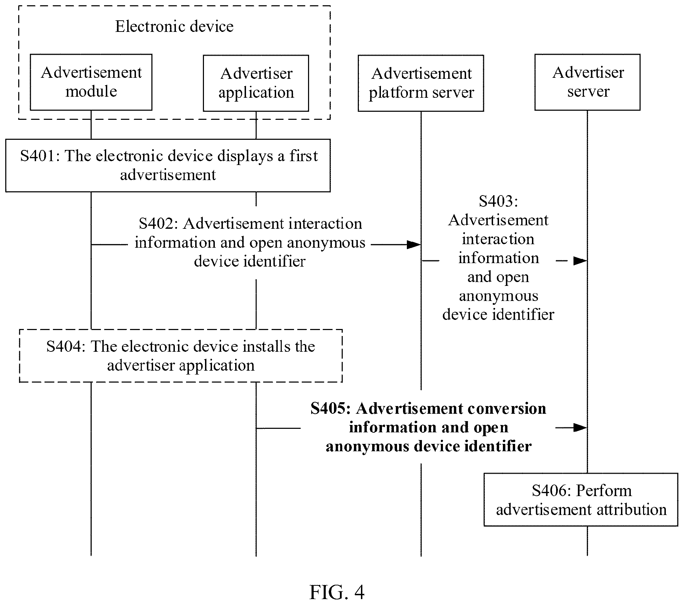

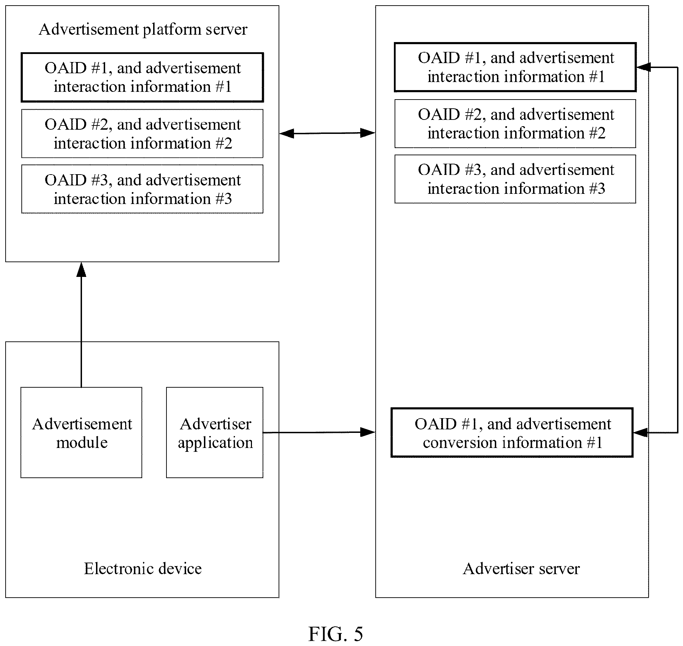

The following describes an advertisement attribution method with reference to FIG. 4 and FIG. 5. FIG. 4 is a schematic flowchart of an advertisement attribution method. FIG. 5 is a diagram of interaction of the advertisement attribution method. As shown in FIG. 4 and FIG. 5, the method is applied to an electronic device, an advertisement platform server, and an advertiser server. The electronic device includes an advertisement module. The advertisement module is configured to perform advertisement interaction with a user. For example, the advertisement module may expose an advertisement, and respond to an operation of tapping an advertisement by the user. The advertisement platform server is configured to store open anonymous device identifiers (open anonymous device identifier, OAID) reported by different electronic devices and advertisement interaction information corresponding to the OAIDs. The advertisement interaction information may include but is not limited to advertisement exposure information, advertisement tap information, and advertisement close information. The advertisement module and the advertisement platform server may be provided by a same manufacturer. The advertisement module may be a software development kit (software development kit, SDK). An advertiser application may be installed in the electronic device, and is configured to send advertisement conversion information and the OAID of the electronic device to the advertiser server after being successfully installed. The advertiser server is configured to perform advertisement attribution. As shown in FIG. 4, the method includes the following steps.

S401: The electronic device displays a first advertisement.

The electronic device may display the first advertisement, and after the first advertisement is displayed, the user may tap or close the first advertisement. In this embodiment of this application, interaction between a user and an advertisement is referred to as advertisement interaction. The advertisement interaction includes but is not limited to an advertisement exposure event (the advertisement exposure event may also be referred to as an advertisement display event), an advertisement tap event, and an advertisement close event. For example, by using the advertisement module, the electronic device exposes the advertisement to the user, and responds to tapping of the user on the exposed advertisement.

S402: The advertisement module sends advertisement interaction information and an OAID to the advertisement platform server.

Correspondingly, the advertisement platform server receives the advertisement interaction information and the OAID that are sent by the advertisement module.

When performing advertisement interaction, the advertisement module may send the advertisement interaction information and the OAID to the advertisement platform server. The advertisement interaction information indicates that the user has interacted with the advertisement. The advertisement interaction information may include the advertisement exposure information and/or the advertisement tap information and/or the advertisement close information. For example, as shown in FIG. 5, after detecting that the user taps the advertisement exposed by the advertisement module, the advertisement module may obtain an OAID #1 from the electronic device, and send advertisement interaction information #1 and the OAID #1 to the advertisement platform server. The advertisement interaction information #1 indicates that the user has tapped the exposed advertisement, and the OAID #1 is an OAID of the electronic device including the advertisement module.

S403: The advertisement platform server sends the advertisement interaction information and the OAID to the advertiser server.

Correspondingly, the advertiser server receives the advertisement interaction information and the OAID that are sent by the advertisement platform server.

The advertisement platform server may send OAIDs of different electronic devices and advertisement interaction information corresponding to the OAIDs to the advertiser server. For example, as shown in FIG. 5, the advertisement platform server may send, to the advertiser server, the OAID #1 and the advertisement interaction information #1 corresponding to the OAID #1, an OAID #2 and advertisement interaction information #2 corresponding to the OAID #2, and an OAID #3 and advertisement interaction information #3 corresponding to the OAID #3.

It may be understood that the advertisement interaction information #1, the advertisement interaction information #2, and the advertisement interaction information #3 are all advertisement interaction information corresponding to the advertisement of the advertiser.

S404: The electronic device installs the advertiser application.

For example, the electronic device may download and install the advertiser application in response to an operation of the user.

S405: The advertiser application sends the advertisement conversion information and the OAID to the advertiser service.

Correspondingly, the advertiser server receives the advertisement conversion information and the OAID that are sent by the advertiser application.

After the user taps the advertisement exposed by the advertisement module, the electronic device may download and install the advertiser application. When running, the advertiser application may obtain the OAID of the electronic device, and then send the advertisement conversion information and the OAID of the electronic device to the advertiser server, where the advertisement conversion information indicates that advertisement conversion succeeds. For example, as shown in FIG. 5, the advertiser application may send the OAID #1 and advertisement conversion information #1 to the advertiser server.

S406: The advertiser server performs advertisement attribution.

The advertiser server may perform advertisement attribution based on the advertisement interaction information, the advertisement conversion information, and the OAID.

For example, as shown in FIG. 5, the advertiser server associates the advertisement conversion information #1 with the advertisement interaction information #1 based on the OAID #1, so as to determine that an advertisement in the electronic device corresponding to the OAID #1 is successfully converted, but advertisements in electronic devices corresponding to the OAID #2 and the OAID #3 are not successfully converted. If the electronic device corresponding to the OAID #1 has a plurality of advertisement interactions of a same application, that is, a plurality of advertisements promoting a same application are exposed to a same user, during advertisement attribution, the advertiser may perform advertisement attribution based on an advertisement tapped by the user for the last time.

It can be learned from the foregoing descriptions that, during advertisement attribution, the advertiser application needs to obtain the OAID of the electronic device. However, with increasing attention and protection for user privacy, the advertiser application may not be able to obtain the OAID of the electronic device. As a result, the foregoing advertisement attribution method cannot be performed. In addition, after obtaining OAIDs of different electronic devices, different advertisers may exchange the OAIDs of different electronic devices and behavior information of users of the OAIDs with each other. This is unfavorable to user privacy protection. Based on this, an embodiment of this application provides an advertisement attribution method. An identifier dedicated to advertisement attribution may be provided. When it is ensured that an advertiser application cannot obtain an OAID, an advertiser can still perform advertisement attribution. In addition, because the identifier is used only for advertisement attribution, user privacy is ensured.

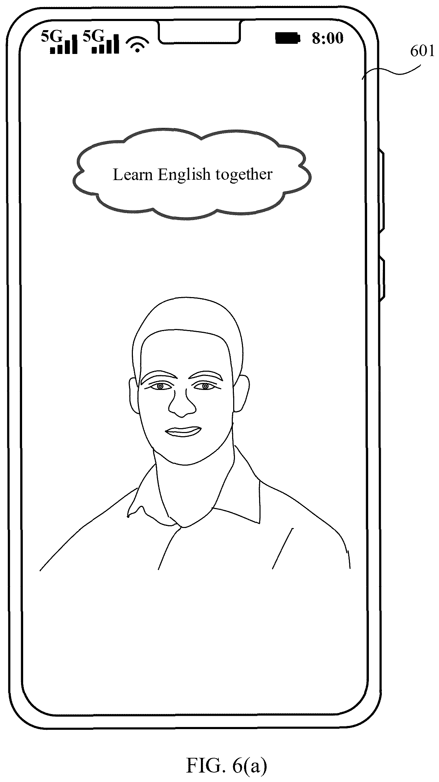

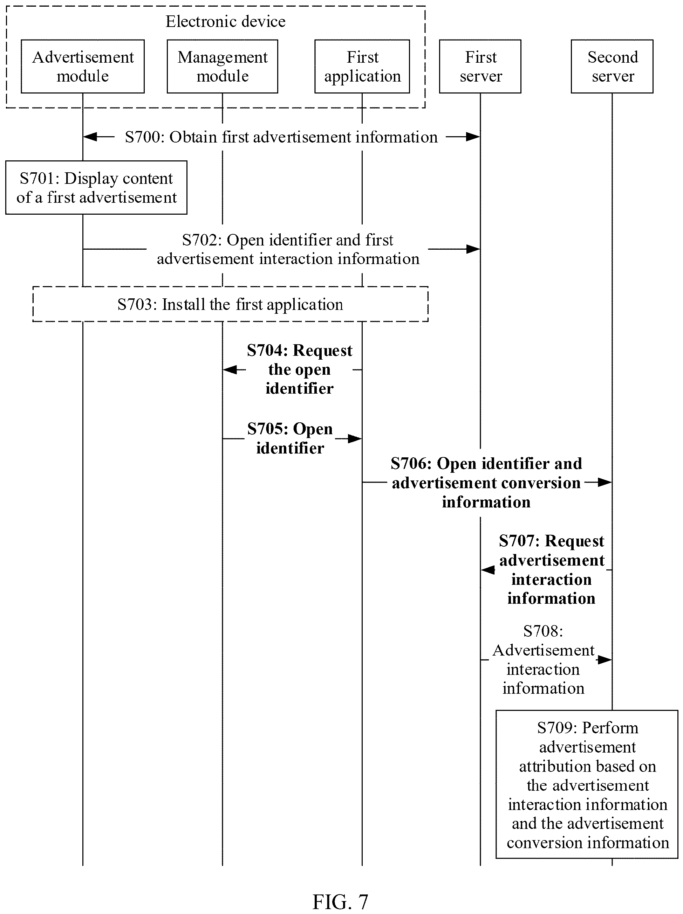

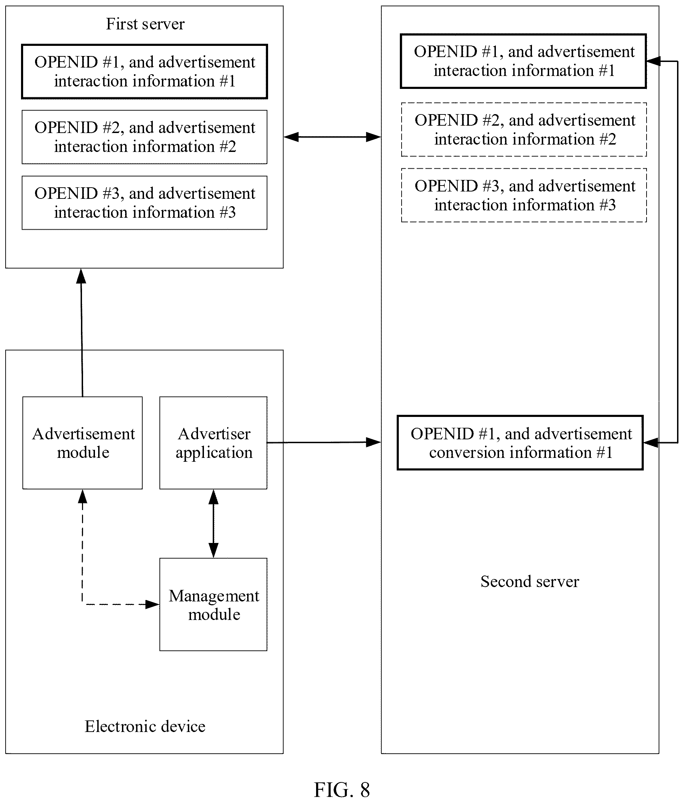

The following describes an advertisement attribution method according to an embodiment of this application with reference to FIG. 6(a) to FIG. 6(g) to FIG. 8. FIG. 6(a) to FIG. 6(g) show a group of graphical user interfaces (graphical user interface, GUI) according to an embodiment of this application. FIG. 7 is a schematic flowchart of an advertisement attribution method 700 according to an embodiment of this application. FIG. 8 is a diagram of interaction of an advertisement attribution method according to an embodiment of this application.

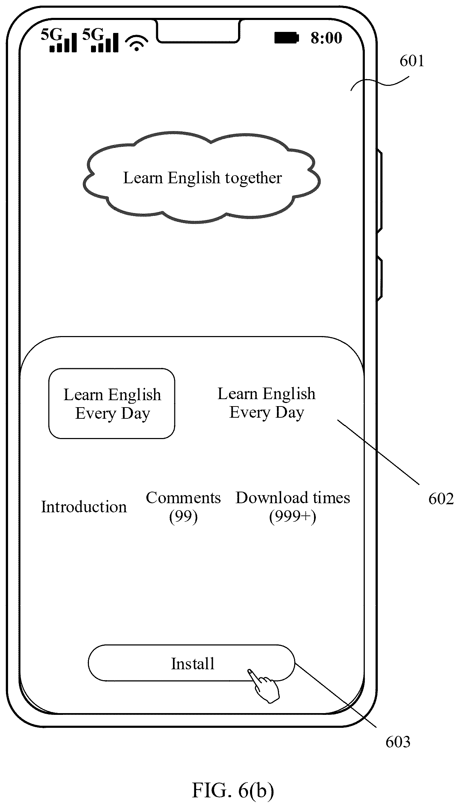

As shown in FIG. 6(a) and FIG. 6(b), an electronic device may display an interface 601. The interface 601 is an advertisement display interface for Learn English Every Day. The electronic device may display an interface 602 including an installation control 603 when the advertisement is displayed for a preset time.

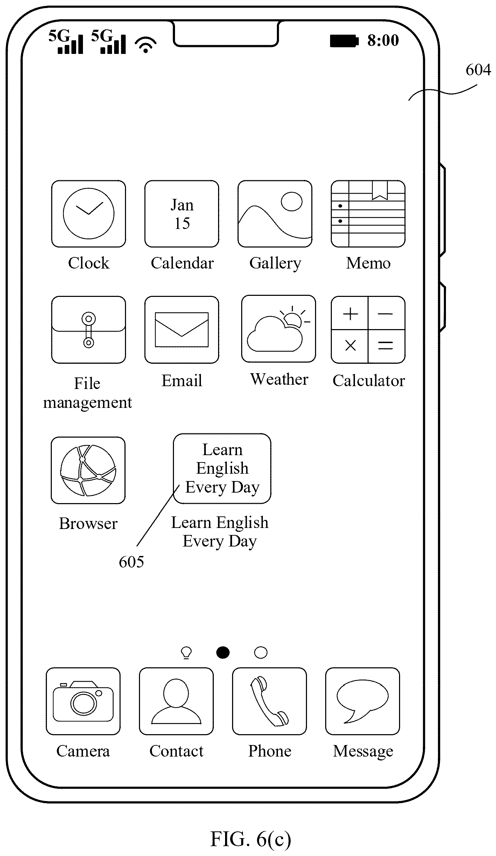

As shown in FIG. 6(b) and FIG. 6(c), the electronic device may download and install Learn English Every Day in response to detecting an operation of tapping the installation control 603 by a user, and may display an icon 605 of Learn English Every Day on an interface 604.

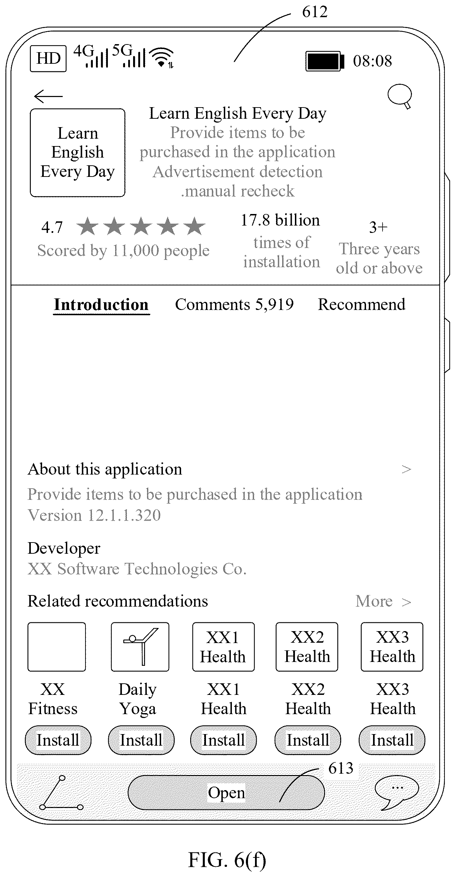

In some embodiments, as shown in FIG. 6(f), after the electronic device installs Learn English Every Day, the electronic device may display an interface 612, where the interface 612 includes an open control 613. The electronic device may run Learn English Every Day in response to an operation of tapping and opening the control 613 by the user.

In the foregoing example, the electronic device installs the application in response to the operation of tapping the advertisement by the user. However, this embodiment of this application is not limited thereto. The electronic device may display the advertisement. After watching the advertisement, the user may further search for and download, in an application store, the application corresponding to the advertisement.

In the foregoing example, displaying the advertisement of Learn English Every Day on the interface 601 and tapping, by the user, the installation control 603 may be collectively referred to as advertisement interaction, and downloading and installing Learn English Every Day by the electronic device is referred to as advertisement conversion.

It should be noted that the manner in which the electronic device exposes the advertisement in the foregoing example is merely an example, but does not constitute a limitation on this application. In this embodiment of this application, the advertisement may alternatively be exposed in another manner.

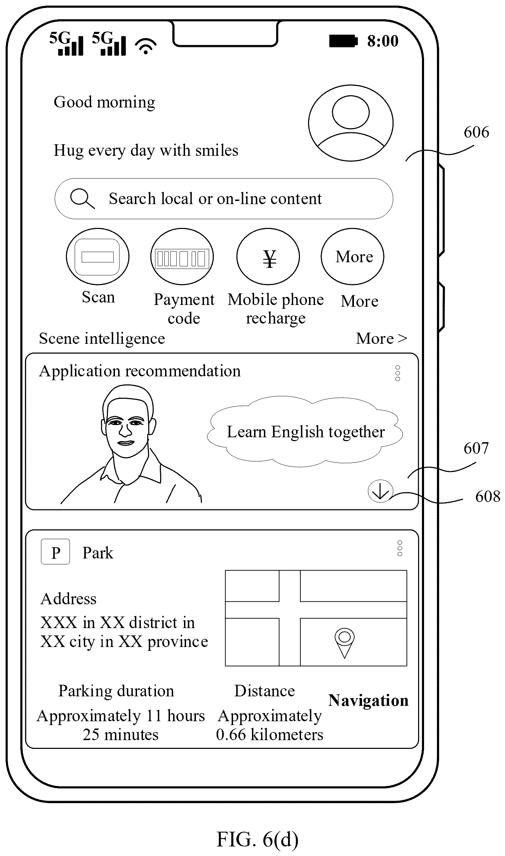

For example, as shown in FIG. 6(d), the electronic device may display an advertisement in an application recommendation bar 607 of a leftmost screen interface 606.

In some embodiments, when displaying an advertisement in the application recommendation bar 607, the electronic device may further display a download control 608 of an application corresponding to the advertisement.

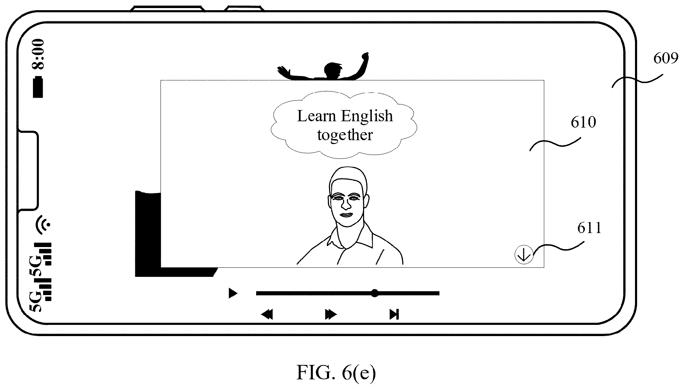

For another example, as shown in FIG. 6(e), the electronic device displays an interface 609, and the interface 609 is a video playing interface. When a video is paused, the electronic device may display an advertisement interface 610.

In some embodiments, when displaying an advertisement on the advertisement interface 610, the electronic device may further display a download control 611 of an application corresponding to the advertisement.

For another example, the electronic device displays an advertisement on a startup interface of a second application.

For another example, the electronic device displays an advertisement on a pop-up interface.

For another example, the electronic device displays an advertisement on an application store interface.

For another example, the electronic device displays an advertisement on a use interface of a third application, that is, the electronic device may display the advertisement in native content of the third application in an interpolated manner. In this embodiment of this application, the advertisement displayed in the native content of the application in the interpolated manner may be referred to as an information flow advertisement (feeds).

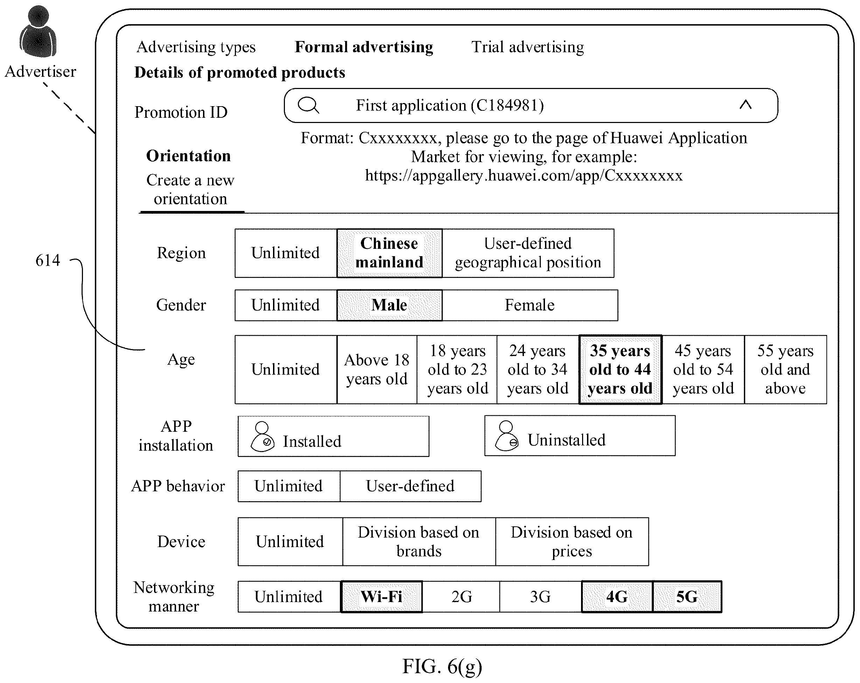

An interface 614 in FIG. 6(g) is an application interface when the advertiser advertises on an advertisement platform. When the advertiser applies to advertise on the advertisement platform, the advertisement platform may generate an advertiser ID used to identify the advertisement, for example, C184981 shown in FIG. 6(g).

The following describes a data flow direction in the foregoing example with reference to FIG. 7 and FIG. 8. It should be noted that, when the data flow direction is described, an example in which a first application is Learn English Every Day is used, but this should not be understood as a limitation on this embodiment of this application.

FIG. 7 is a schematic flowchart of an advertisement attribution method 700 according to an embodiment of this application. FIG. 8 is a diagram of interaction of an advertisement attribution method according to an embodiment of this application. As shown in FIG. 7 and FIG. 8, the method is applied to an electronic device, a first server, and a second server. The electronic device includes an advertisement module and a management module. The advertisement module is configured to perform advertisement interaction with a user. For example, the advertisement module may expose an advertisement, and respond to an operation of tapping an advertisement by the user. The first server is configured to store open identifiers (open identifier, OPENID) reported by different electronic devices and advertisement interaction information that corresponds to the OPENIDs. The advertisement interaction information includes but is not limited to an advertisement exposure event, an advertisement tap event, and an advertisement close event. In some embodiments, the advertisement module and the first server may be provided by a same manufacturer. In some other embodiments, the advertisement module, the electronic device, the management module, and the first server may be provided by a same manufacturer. The first application and the second server may be provided by a same manufacturer. The advertisement module may be an SDK. The management module is configured to: obtain a device ID, and generate an OPENID based on the device ID and an advertiser ID. The first application may be installed in the electronic device, and is used to send advertisement conversion information and the OPENID to the second server after being successfully installed. The second server is configured to perform advertisement attribution. In this embodiment of this application, the first server may also be referred to as an advertisement platform server, the second server may also be referred to as an advertiser server, and the first application may also be referred to as an advertiser application. As shown in FIG. 7, the method includes the following steps.

S700: The advertisement module obtains first advertisement information.

For example, in some embodiments, the advertisement module may obtain the first advertisement information by communicating with the first server, where the first advertisement information includes content of a first advertisement and an advertiser ID of the first advertisement.

For example, in some other embodiments, the advertisement module may obtain the first advertisement information by communicating with the second server, where the first advertisement information includes the content of the first advertisement and the advertiser ID of the first advertisement.

The advertiser ID may be generated in the following manners:
In a possible implementation, the advertiser ID is an ID that is provided by an advertisement platform for an advertiser and that is used to identify the advertiser. When the advertiser applies to advertise on the advertisement platform, the advertisement platform may provide the advertiser with the ID used to identify the advertiser. In other words, the advertiser ID is associated with the advertiser, and the advertiser corresponding to the advertiser ID may be determined based on the advertiser ID.

In a possible implementation, the advertiser ID may be an ID that is provided by a manufacturer corresponding to the electronic device and that is used to identify the advertiser. When the advertiser needs to advertise on the electronic device, the advertiser applies to the manufacturer corresponding to the electronic device for the ID that is used to identify the advertiser, that is, the advertiser ID.

S701: The advertisement module displays the content of the first advertisement.

For example, the advertisement module may display the content of the first advertisement based on the first advertisement information. When the advertisement module displays the content of the first advertisement, the user may tap the advertisement to download an application corresponding to the first advertisement, or perform advertisement interaction such as closing the first advertisement. In this embodiment of this application, the advertisement interaction may include but is not limited to the advertisement exposure event, the advertisement tap event, the advertisement close event, and the like. For example, in the GUIs shown in FIG. 6(a) to FIG. 6(g), the advertisement interaction includes: displaying the advertisement of Learn English Every Day on the interface 601, and taping, by the user, the installation control 603.

S702: The advertisement module sends the OPENID and first advertisement interaction information to the first server.

Correspondingly, the first server receives the first advertisement interaction information and the OPENID that are sent by the advertisement module.

For example, when performing advertisement interaction, the advertisement module may send the OPENID and the first advertisement interaction information to the first server, where the OPENID is generated based on the device ID and the advertiser ID. The device ID is unique, and each electronic device has a different device ID. For example, the device ID may be an international mobile equipment identity (international mobile equipment identity, IMEI) or a mobile equipment identifier (mobile equipment identifier, MEID). The advertisement module may obtain the advertiser ID from the advertisement information. For example, if the advertisement module obtains the first advertisement information, and the first advertisement information includes the advertiser ID of the first advertisement, the advertisement module may obtain the advertiser ID of the first advertisement from the first advertisement information.

It may be understood that, names of the OPENID and the advertiser ID in this embodiment of this application are merely examples, but should not be understood as a limitation on this application.

Using the GUIs shown in FIG. 6(a) to FIG. 6(g) and the diagram of interaction shown in FIG. 8 as an example, the advertisement module performs advertisement interaction with the user, that is, exposes the advertisement of Learn English Every Day (for example, exposes the advertisement of Learn English Every Day on the interface 601), and the user taps the installation control 603. In this case, the advertisement module may obtain the device ID, then generate an OPENID #1 based on the advertiser ID of Learn English Every Day and the device ID, and then send the OPENID #1 and advertisement interaction information #1 to the first server.

In some other embodiments, the advertisement module may send the advertiser ID of Learn English Every Day to the management module. The management module generates the OPENID #1 based on the advertiser ID of Learn English Every Day and the device ID, and then sends the OPENID #1 to the advertisement module. The advertisement module sends the OPENID #1 and the advertisement interaction information #1 to the first server.

A manner of generating the OPENID based on the advertiser ID and the device ID is not limited in this embodiment of this application.

For example, the OPINID is generated based on the advertiser ID and the device ID by using an encryption algorithm. A type of the encryption algorithm is not limited in this embodiment of this application. For example, the encryption algorithm may be a hash algorithm, the device ID and the advertiser ID are used as inputs of the hash algorithm, and an output of the hash algorithm is used as the OPENID. A type of the hash algorithm is not limited in this embodiment of this application. For example, the hash algorithm may be a message digest (message digest, MD) algorithm or a secure hash algorithm (secure hash algorithm, SHA). For another example, the encryption algorithm may be an asymmetric encryption algorithm.

For example, the OPENID is obtained by superposing the device ID and the advertiser ID. For example, if the device ID is XXX and the advertiser ID is YYY, the OPENID may be XXXYYY.

Alternatively, in some embodiments, S702 may be replaced with:

The advertisement module sends the device ID and the first advertisement interaction information to the first server.

The advertisement module may send the device ID and the first advertisement interaction information to the first server, so that the first server can determine, based on the first advertisement interaction information, the advertiser ID corresponding to the first advertisement interaction information, and then generate the OPENID based on the advertiser ID and the device ID.

S703: The electronic device installs the first application.

For example, the electronic device may display the installation interface in response to the operation of tapping the installation control in the first advertisement by the user, to install the first application.

S704: The first application requests the OPENID from the management module.

For example, after the user taps the advertisement exposed by the advertisement module, the electronic device may download and install the first application, and when running, the first application may request the OPENID from the management module. When requesting the OPENID from the management module, the first application may directly request the OPENID. For example, the first application may send request information to the management module, where the request information is used to request the OPENID, and the request information includes the advertiser ID. The first application may alternatively indirectly request the OPENID. For example, the first application may send the advertiser ID to the management module, to request the management module to generate the OPENID based on the advertiser ID and the device ID.

It should be noted that, when developing an application, a developer may write an advertiser ID into code of the application. After the application is installed, the application may obtain the advertiser ID corresponding to the application.

In some other embodiments, after being installed, the first application may request the OPENID from the management module.

S705: The management module sends the OPENID to the first application.

Correspondingly, the first application receives the OPENID sent by the management module.

For example, the management module may obtain the device ID, then generate the OPENID based on the advertiser ID and the device ID, and then send the OPENID to the first application.

The GUIs shown in FIG. 6(a) to FIG. 6(g) and the diagram of interaction shown in FIG. 8 are used as an example. After Learn English Every Day is successfully installed, the OPENID may be requested from the management module. The management module generates an OPENID #1 based on the advertiser ID of Learn English Every Day and the device ID of the electronic device, and then sends the OPENID #1 to Learn English Every Day.

S706: The first application sends the OPENID and the advertisement conversion information to the second server.

Correspondingly, the second server receives the OPENID and the advertisement conversion information that are sent by the first application.

For example, after receiving the OPENID sent by the management module, the first application may send the OPENID and the advertisement conversion information to the second server, where the advertisement conversion information indicates that advertisement conversion succeeds.

The GUIs shown in FIG. 6(a) to FIG. 6(g) and the diagram of interaction shown in FIG. 8 are used as an example. After Learn English Every Day is successfully installed and the OPENID #1 is obtained, Learn English Every Day may send the OPENID #1 and advertisement conversion information #1 to the second server, where the advertisement conversion information #1 indicates that Learn English Every Day is successfully installed. In other words, the advertisement exposed by the advertiser in the advertisement module is successfully converted.

S707: The second server requests the advertisement interaction information from the first server.

When requesting the advertisement interaction information from the first server, the second server may request the first application to send the advertisement interaction information corresponding to the OPENID, or may request advertisement interaction information that is of the advertiser and that corresponds to another OPENID stored in the first server, that is, the advertisement interaction information that is of the advertiser and that corresponds to another electronic device.

For example, the second server may request the advertisement interaction information from the first server. When requesting the advertisement interaction information from the first server, the second server may directly request the advertisement interaction information. For example, the second server may send first request information to the first server, where the first request information is used to request the advertisement interaction information, and the first request information includes the OPENID. The second server may alternatively indirectly request the advertisement interaction information. For example, the second server may send the OPENID to the first server to request the advertisement interaction information corresponding to the OPENID. In this example, the second server requests the advertisement interaction information corresponding to the OPENID, that is, the first advertisement interaction information.

For example, the second server may request the advertisement interaction information from the first server. When requesting the advertisement interaction information from the first server, the second server may directly request the advertisement interaction information. For example, the second server may send request information to the first server, where the request information is used to request the advertisement interaction information, and the request information includes the advertiser ID. The second server may alternatively indirectly request the advertisement interaction information. For example, the second server may send the advertiser ID to the first server. In this example, the second server requests the advertisement interaction information corresponding to the advertiser ID.

For example, the second server may request the advertisement interaction information of Learn English Every Day from the first server.

S708: The first server sends the advertisement interaction information to the second server.

Correspondingly, the second server receives the advertisement interaction information sent by the first server.

For example, after receiving the first request information or the OPENID sent by the second server, the first server may determine the corresponding first advertisement interaction information based on the first request information or the OPENID, so as to send the first advertisement interaction information to the second server.

For example, as shown in FIG. 8, the first server sends the advertisement interaction information #1 to the second server, where the advertisement interaction information #1 is advertisement interaction information corresponding to the OPENID #1.

For example, after receiving second request information or the advertiser ID sent by the second server, the first server may determine, based on the second request information or the advertiser ID, the advertisement interaction information corresponding to the advertiser ID, so as to send the advertisement interaction information to the second server, where the advertisement interaction information includes the first advertisement interaction information.

For example, as shown in FIG. 8, it is assumed that the OPENID is obtained by superposing the device ID and the advertiser ID, where the first three characters of the OPENID are the device ID, and the last three characters are the advertiser ID. The first server stores the OPENID #1, an OPENID #2, an OPENID #3, and the advertisement interaction information #1, advertisement interaction information #2, and advertisement interaction information #3 that correspond to the foregoing three OPENIDs, where the OPENID #1 may be XXXYYY, the OPENID #2 may be AAAYYY, and the OPENID #3 may be BBBYYY. It may be determined, based on the OPENID #1, the OPENID #2, and the OPENID #3, that the advertisement interaction information #1, the advertisement interaction information #2, and the advertisement interaction information #3 are advertisement interaction information of a same advertiser. After the second server sends the second request information or the advertiser ID to the first server, where the advertiser ID is YYY, the first server may determine, based on the advertiser ID, that the advertisement interaction information #1, the advertisement interaction information #2, and the advertisement interaction information #3 are advertisement interaction information of the advertiser, and may send the advertisement interaction information #1, the advertisement interaction information #2, and the advertisement interaction information #3 to the second server. For another example, because the advertisement interaction information includes advertisement information, the advertiser corresponding to the advertisement interaction information can be determined based on the advertisement interaction information, that is, the advertiser ID is determined. As shown in FIG. 8, the second server may determine, based on the advertisement interaction information #1, the advertisement interaction information #2, and the advertisement interaction information #3, that the foregoing three pieces of advertisement interaction information are advertisement interaction information of a same advertiser. When the second server requests the interaction information from the first server, the first server may determine the advertiser corresponding to the second server, so that the first server can determine that the advertisement interaction information #1, the advertisement interaction information #2, and the advertisement interaction information #3 are advertisement interaction information of the advertiser, and may send the advertisement interaction information #1, the advertisement interaction information #2, and the advertisement interaction information #3 to the second server.

S709: The second server performs advertisement attribution based on the advertisement interaction information and the advertisement conversion information.

For example, after obtaining the advertisement interaction information and the advertisement conversion information, the second server may perform advertisement attribution.

For example, the second server may determine, based on the advertisement interaction information #1, that the user installs Learn English Every Day by using the advertisement exposed by the advertisement module.

For example, the second server may determine, based on the advertisement interaction information #1, the advertisement interaction information #2, and the advertisement interaction information #3, that the user installs Learn English Every Day by using the advertisement exposed by the advertisement module.

Optionally, in some embodiments, the method further includes:

The second server sends an advertisement attribution result to the first server.

In this embodiment of this application, a new OPENID used for advertisement attribution is provided, so that when an advertiser application cannot obtain an OAID, the OPENID may be used to perform advertisement attribution. The OPENID is generated based on the device ID and the advertiser ID, and is different from the OAID. The OPENID provided in this embodiment of this application is different for different advertisements. Therefore, different advertisers can only use the OPENID to perform advertisement attribution, but cannot exchange identifiers with each other, so that user privacy is ensured.

Further, in some embodiments, encryption processing may be performed when the OPENID is generated, so that the advertiser cannot obtain the device ID through inverse inference based on the OPENID, thereby further ensuring privacy security of the user.

Optionally, in some embodiments, the advertisement module may be a third-party advertisement module.

When the advertisement module is the third-party advertisement module, the third-party advertisement module needs to first request the OPENID from the management module. For example, the third-party advertisement module sends, to the management module, the advertiser ID corresponding to the advertisement exposed by the third-party advertisement module, to request the OPENID. The management module generates the OPENID based on the device ID and the advertiser ID, and sends the OPENID to the third-party advertisement module. After receiving the OPENID sent by the management module, the third-party advertisement module may send the OPENID and the corresponding advertisement interaction information to the first server.

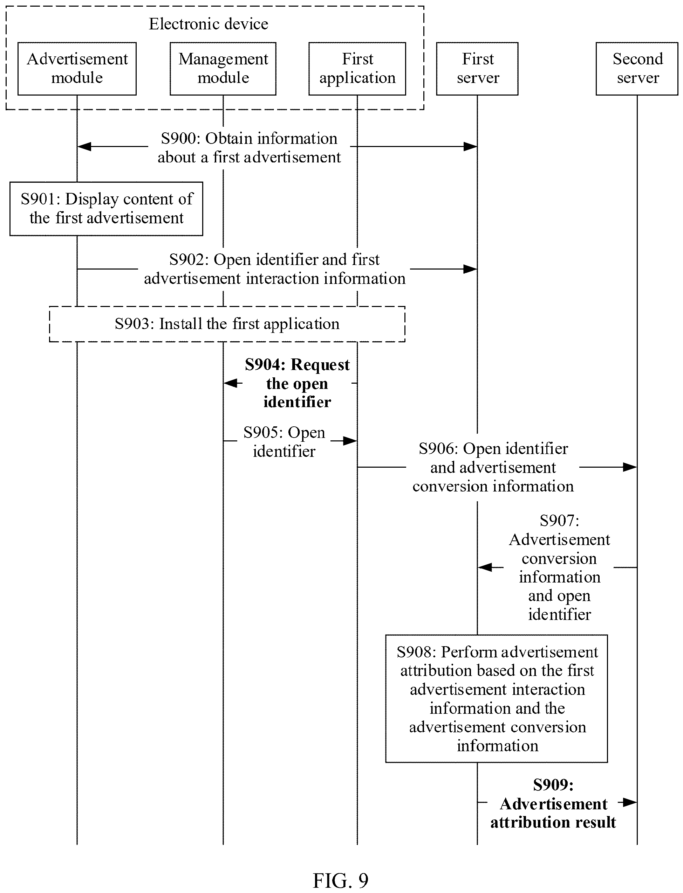

FIG. 9 is a schematic flowchart of another advertisement attribution method 900 according to an embodiment of this application. As shown in FIG. 9, the method includes the following steps.

S900: An advertisement module obtains information about a first advertisement.

S901: The advertisement module displays content of the first advertisement.

S902: The advertisement module sends an OPENID and first advertisement interaction information to a first server.

S903: An electronic device installs a first application.

S904: The first application requests the OPENID from a management module.

S905: The management module sends the OPENID to the first application.

S906: The first application sends the OPENID and advertisement conversion information to a second server.

It should be understood that, for descriptions of S900 to S906, refer to the foregoing text. For brevity, details are not described herein again.

S907: The second server sends the advertisement conversion information and the OPENID to the first server.

Correspondingly, the first server receives the advertisement conversion information and the OPENID that are sent by the second server.

S908: The first server performs advertisement attribution based on the first advertisement interaction information and the advertisement conversion information.

After receiving the advertisement conversion information and the OPENID that are sent by the second server, the first server may determine the advertisement interaction information corresponding to the OPENID, and then the first server performs advertisement attribution based on the advertisement conversion information and the first advertisement interaction information.

S909: The first server sends an advertisement attribution result to the second server.

Correspondingly, the second server receives the advertisement attribution result sent by the first server.

In this embodiment of this application, the second server may further send the advertisement conversion information to the first server, the first server performs advertisement attribution, and then the first server sends the advertisement attribution result to the second server.

Optionally, in some embodiments, the advertisement module may be a third-party advertisement module.

When the advertisement module is the third-party advertisement module, the third-party advertisement module needs to first request the OPENID from the management module. For example, the third-party advertisement module sends, to the management module, an advertiser ID of an advertisement exposed by the third-party advertisement module, to request the OPENID. The management module generates the OPENID based on a device ID and the advertiser ID, and sends the OPENID to the third-party advertisement module. After receiving the OPENID sent by the management module, the third-party advertisement module may send the OPENID and the corresponding advertisement interaction information to the first server.

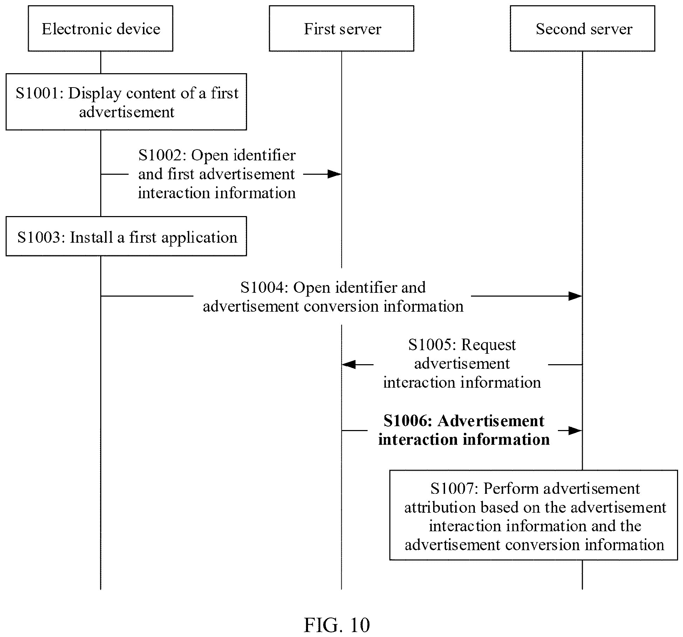

FIG. 10 is a diagram of a system interaction method according to an embodiment of this application. The system includes an electronic device, a first server, and a second server. In some embodiments, the electronic device and the first server may be provided by a same manufacturer. In some other embodiments, the first server may be a third-party server. The electronic device includes an advertisement module and a management module. As shown in FIG. 10, the method includes the following steps.

S1001: The electronic device displays content of a first advertisement.

For example, the electronic device may obtain first advertisement information from the first server by using the advertisement module, where the first advertisement information includes the content of the first advertisement and an advertiser ID. When displaying an advertisement, the electronic device may perform advertisement interaction with a user. For example, the user may tap a download control on an advertisement interface, and the electronic device downloads and installs, in response to the operation of the user, an application corresponding to the advertisement. For another example, the user may tap a close control on the advertisement interface, and the electronic device may close the advertisement in response to the operation of the user.

S1002: The electronic device sends first advertisement interaction information and an OPENID to the first server.

For example, the electronic device displays the advertisement by using the advertisement module, and may perform advertisement interaction with the user when displaying the advertisement. The electronic device may send the first advertisement interaction information and the OPENID to the first server. For example, if the electronic device detects that the user taps the advertisement, the electronic device may send advertisement interaction information of the advertisement and the OPENID corresponding to the advertisement to the first server, where the advertisement interaction information indicates that the electronic device has displayed the advertisement and that the user has tapped the advertisement. For another example, when displaying the advertisement, the electronic device may send the advertisement interaction information of the advertisement and the OPENID corresponding to the advertisement to the first server, where the advertisement interaction information indicates that the electronic device has displayed the advertisement.

S1003: The electronic device installs a first application.

For example, the electronic device may download and install the first application by tapping the advertisement. For example, the electronic device exposes an advertisement of an advertiser, and the user may enable, by tapping the advertisement, the electronic device to download and install an application of the advertiser.

It should be noted that an installation package of the first application that is obtained by the electronic device may include the advertiser ID.

S1004: The electronic device sends the OPENID and advertisement conversion information to the second server.

For example, when installing the first application and running the first application, the electronic device may send the OPENID and the advertisement conversion information to the second server by using the first application. The first application may obtain the OPENID by using the management module.

For example, after detecting that the first application is successfully installed, the electronic device may send the OPENID and the advertisement conversion information to the second server by using the first application. The first application may obtain the OPENID by using the management module.

It should be understood that, for descriptions of obtaining the OPENID by the first application, refer to the foregoing text. Details are not described herein again.

S1005: The second server requests the advertisement interaction information from the first server.

S1006: The first server sends the advertisement interaction information to the second server.

The first server sends the advertisement interaction information to the second server, where the advertisement interaction information includes the first advertisement interaction information.

S1007: The second server performs advertisement attribution based on the advertisement interaction information and the advertisement conversion information.

It should be understood that, for descriptions of S1005 to S1007, refer to the foregoing text. For brevity, details are not described herein again.

In this embodiment of this application, a new identifier used for advertisement attribution is provided, so that when an advertiser application cannot obtain an OAID, the identifier may be used to perform advertisement attribution. The identifier is generated based on the device ID and the advertiser ID, and is different from the OAID. The identifier provided in this embodiment of this application is different for different advertisements. Therefore, different advertisers can only use the identifier to perform advertisement attribution, but cannot exchange identifiers with each other, so that user privacy is ensured.

Optionally, in some embodiments, the advertisement module may be a third-party advertisement module, and the first server is a server corresponding to the third-party advertisement module.

Optionally, in some embodiments, the method further includes:
The second server sends an advertisement attribution result to the first server.

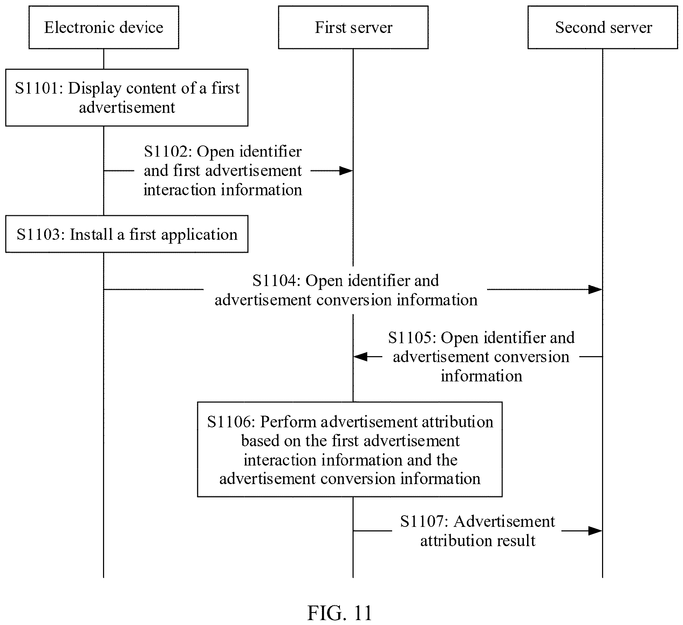

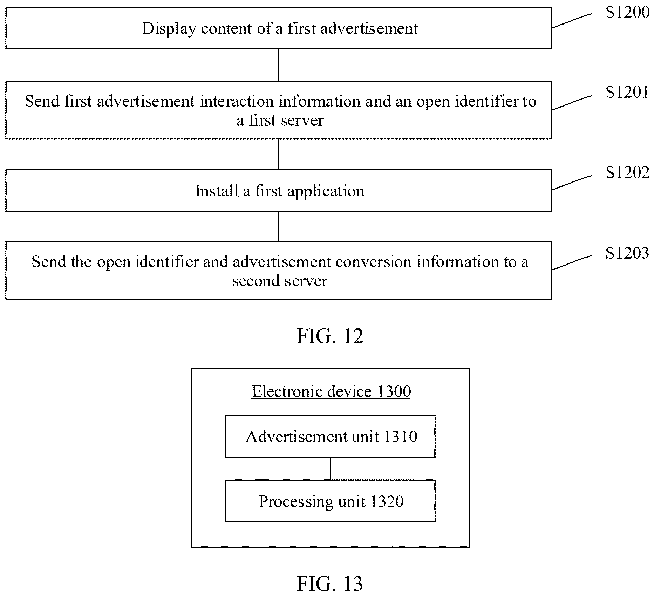

FIG. 11 is a diagram of a system interaction method according to an embodiment of this application. The system includes an electronic device, a first server, and a second server. In some embodiments, the electronic device and the first server may be provided by a same manufacturer. In some other embodiments, the first server may be a third-party server, the electronic device includes an advertisement module and a management module, the advertisement module and the first server may be provided by a same manufacturer, and the electronic device and the management module may be provided by a same manufacturer. As shown in FIG. 13, the method includes the following steps.

S1101: The electronic device displays content of a first advertisement.

S1102: The electronic device sends first advertisement interaction information and an OPENID to the first server.

S1103: The electronic device installs a first application.

S1104: The electronic device sends the OPENID and advertisement conversion information to the second server.

It should be understood that, for descriptions of S1101 to S1104, refer to the foregoing text. For brevity, details are not described herein again.

S1105: The second server sends the OPENID and the advertisement conversion information to the first server.

Correspondingly, the first server receives the advertisement conversion information and the OPENID that are sent by the second server.

Alternatively, in some embodiments, the electronic device sends the OPENID and the advertisement conversion information to the first server.

S1106: The first server performs advertisement attribution based on the first advertisement interaction information and the advertisement conversion information.

For example, after receiving the advertisement conversion information and the OPENID that are sent by the second server, the first server may determine the advertisement interaction information corresponding to the OPENID, and then the first server performs advertisement attribution based on the advertisement conversion information and the first advertisement interaction information.

S1107: The first server sends an advertisement attribution result to the second server.

In this embodiment of this application, the second server may further send the advertisement conversion information to the first server, the first server performs advertisement attribution, and then the first server sends the advertisement attribution result to the second server.

Optionally, in some embodiments, the advertisement module is a third-party advertisement module, and the first server is a server corresponding to the third-party advertisement module.

In this embodiment of this application, the second server may further send the advertisement conversion information to the first server, the first server performs advertisement attribution, and then the first server sends the advertisement attribution result to the second server.

FIG. 12 is a schematic flowchart of an advertisement attribution method according to an embodiment of this application. The method is applied to an electronic device, and the electronic device includes an advertisement module. As shown in FIG. 12, the method includes the following steps.

S1200: Display content of a first advertisement.

For example, the electronic device may display the content of the first advertisement, and the content of the first advertisement is related to a first application.

S1201: Send first advertisement interaction information and an OPENID to a first server.

For example, when detecting that the advertisement module has advertisement interaction, the electronic device may send the first advertisement interaction information and the OPENID to the first server.

S1202: Install the first application.

For example, the electronic device may install the first application through interaction between a user and the advertisement. For example, the electronic device exposes an advertisement of an advertiser, and the user may enable, by tapping the advertisement, the electronic device to download an installation package of the first application and install the first application of the advertiser. The installation package of the first application may include an advertiser ID.

S1203: Send the open identifier and advertisement conversion information to the second server.

For example, when successfully installing the first application and running the first application, the electronic device may send the open identifier and the advertisement conversion information to the second server by using the first application, where the first advertisement interaction information and the advertisement conversion information are used to perform advertisement attribution.

For example, when detecting that the first application is successfully installed, the electronic device may send the open identifier and the advertisement conversion information to the second server by using the first application, where the first advertisement interaction information and the advertisement conversion information are used to perform advertisement attribution.

In this embodiment of this application, a new identifier used for advertisement attribution is provided, so that when an advertiser application cannot obtain an OAID, the identifier may be used to perform advertisement attribution. The identifier is generated based on the device ID and the advertiser ID, and is different from the OAID. The identifier provided in this embodiment of this application is different for different advertisements. Therefore, different advertisers can only use the identifier to perform advertisement attribution, but cannot exchange identifiers with each other, so that user privacy is ensured.

Optionally, in some embodiments, the advertisement module is a third-party advertisement module, and the first server may be a server corresponding to the third-party advertisement module.

Optionally, in some embodiments, the electronic device includes a management module, and before that the electronic device sends the first advertisement interaction information and the open identifier to the first server, the method further includes:

The electronic device obtains the device ID of the electronic device and the advertiser ID by using the management module, and generates the OPENID by using the management module.

Optionally, in some embodiments, the open identifier is generated based on the device ID of the electronic device and the advertiser ID by using an encryption algorithm.

Optionally, in some embodiments, the electronic device may display the content of the first advertisement in at least one of the following manners:
The electronic device displays the content of the first advertisement on a leftmost screen; the electronic device displays the content of the first advertisement on a startup interface of a second application; the electronic device displays the content of the first advertisement on a pause interface during video play; the electronic device displays the content of the first advertisement on a pop-up interface; the electronic device displays the content of the first advertisement on an application store interface; and the electronic device displays the content of the first advertisement on an application recommendation interface.

In this embodiment of this application, the electronic device may send advertisement interaction information of a third-party advertisement platform to the second server, so that the second server can obtain advertisement interaction information from different advertisement platforms by using a same electronic device, thereby helping improve accuracy of advertisement attribution.

The foregoing mainly describes, from the perspective of the electronic device, an advertisement attribution method provided in embodiments of this application. It may be understood that, to implement the foregoing functions, the electronic device includes a corresponding hardware structure and/or software module for performing each of the functions. A person skilled in the art should be easily aware that, algorithms and steps in the examples described with reference to embodiments disclosed in this specification can be implemented in a form of hardware or a combination of hardware and computer software in this application. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the processor in the electronic device may be divided into functional modules (or units) based on the foregoing method examples. For example, each functional module (or unit) may be obtained through division based on each corresponding function, or two or more functions may be integrated into one processing module (or unit). The integrated module (or unit) may be implemented in a form of hardware, or may be implemented in a form of a software functional module (or unit). It should be noted that, in embodiments of this application, division into modules (or units) is an example, and is merely a logical function division. In actual implementation, another division manner may be used.

When each functional module (or unit) corresponding to each function is obtained through division, FIG. 13 is a diagram of composition of an electronic device 1300 according to an embodiment of this application. As shown in FIG. 13, the electronic device 1300 includes an advertisement unit 1310 and a processing unit 1320.

The advertisement unit 1310 is configured to display content of a first advertisement.

The processing unit 1320 is configured to send first advertisement interaction information and an open identifier to a first server, where the open identifier is generated based on a device identifier of the electronic device and an advertiser identifier.

The processing unit 1320 is further configured to install a first application.

The processing unit 1320 is further configured to send the open identifier and advertisement conversion information to a second server, where the advertisement conversion information and the first advertisement interaction information are used to perform advertisement attribution.

It should be noted that, all related content of the steps in the foregoing method embodiments may be referenced to function descriptions of corresponding functional modules, and details are not described herein again. The electronic device provided in this embodiment of this application is configured to perform the foregoing data transmission method, and therefore can achieve the same effect.

An embodiment of this application further provides an electronic device, including a processor, a memory, an application, and a computer program. The foregoing components may be connected through one or more communication buses. The one or more computer programs are stored in the foregoing memory and are configured to be executed by the one or more processors. The one or more computer programs include instructions, and the instructions may be used to enable the electronic device to perform the steps performed by the electronic device in the foregoing embodiments.

For example, the processor may be specifically the processor 110 shown in FIG. 1, and the memory may be specifically the internal memory 120 shown in FIG. 1 and/or an external memory connected to the electronic device.

An embodiment of this application further provides a chip. The chip includes a processor and a communication interface. The communication interface is configured to: receive a signal and transmit the signal to the processor. The processor processes the signal, so that the advertisement attribution method in any one of the foregoing possible implementations is performed.

An embodiment further provides a computer-readable storage medium. The computer-readable storage medium stores computer instructions. When the computer instructions are run on an electronic device, the electronic device is enabled to perform the foregoing related method steps, to implement the advertisement attribution method in the foregoing embodiments.

An embodiment further provides a computer program product. When the computer program product runs on a computer, the computer is enabled to perform the foregoing related steps, to implement the advertisement attribution method in the foregoing embodiments.

As used in the foregoing embodiments, based on the context, the term "when..." or "after..." may be interpreted as a meaning of "if..." or "after..." or "in response to determining..." or "in response to detecting...". Similarly, based on the context, the phrase "when it is determined that..." or "if (a stated condition or event) is detected" may be interpreted as a meaning of "if it is determined that..." or "in response to determining..." or "when (a stated condition or event) is detected" or "in response to detecting (a stated condition or event)".

A person of ordinary skill in the art may be aware that, units, algorithms, and steps in the examples described with reference to embodiments disclosed in this specification can be implemented in a form of electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing described apparatus embodiments are merely examples. For example, division into the units is merely logic function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A system, wherein the system comprises an electronic device, a first server, and a second server, and the second server is a server corresponding to a first application, wherein
the electronic device displays content of a first advertisement, wherein the content of the first advertisement is related to the first application;
the electronic device sends first advertisement interaction information and an open identifier to the first server, wherein the open identifier is generated based on a device identifier of the electronic device and an advertiser identifier, and the advertiser identifier is associated with the first advertisement;
the electronic device installs the first application;
the electronic device sends advertisement conversion information and the open identifier to the second server;
the second server requests advertisement interaction information from the first server, wherein the advertisement interaction information comprises the first advertisement interaction information;
the first server sends the advertisement interaction information to the second server; and
the second server performs advertisement attribution based on the advertisement interaction information and the advertisement conversion information.

2. The system according to claim 1, wherein
after the first application is installed on the electronic device, when the electronic device runs the first application, the electronic device sends the advertisement conversion information and the open identifier to the second server.

3. The system according to claim 1 or 2, wherein the electronic device comprises an advertisement module, and that the electronic device displays content of a first advertisement comprises:
obtaining, by the electronic device, first advertisement information from the first server by using the advertisement module, wherein the first advertisement information comprises the content of the first advertisement and the advertiser identifier; and
displaying, by the electronic device, the content of the first advertisement based on the first advertisement information.

4. The system according to claim 3, wherein the advertisement module is a third-party advertisement module.

5. The system according to any one of claims 1 to 4, wherein the electronic device comprises a management module, and before the electronic device sends the first advertisement interaction information and the open identifier to the first server, the electronic device obtains the device identifier of the electronic device and the advertiser identifier by using the management module, and generates the open identifier by using the management module.

6. The system according to any one of claims 1 to 5, wherein the second server sends an advertisement attribution result to the first server.

7. The system according to any one of claims 1 to 6, wherein the open identifier is generated based on the device identifier of the electronic device and the advertiser identifier by using an encryption algorithm.

8. The system according to any one of claims 1 to 7, wherein that the electronic device installs the first application comprises:
obtaining, by the electronic device, an installation package of the first application and installing the first application in response to an operation of tapping the first advertisement by a user.

9. The system according to claim 8, wherein the installation package of the first application comprises the advertiser identifier.

10. The system according to any one of claims 1 to 9, wherein the electronic device displays the content of the first advertisement in at least one of the following manners:
displaying, by the electronic device, the content of the first advertisement on a leftmost screen;
displaying, by the electronic device, the content of the first advertisement on a startup interface of a second application;
displaying, by the electronic device, the content of the first advertisement on a pause interface during video play;
displaying, by the electronic device, the content of the first advertisement on a pop-up interface;
displaying, by the electronic device, the content of the first advertisement on an application store interface;
displaying, by the electronic device, the content of the first advertisement on an application recommendation interface; and
displaying, by the electronic device, the content of the first advertisement by using a use interface of a third application.

11. An advertisement attribution method, wherein the method is applied to an electronic device, and the method comprises:
displaying, by the electronic device, content of a first advertisement, wherein the content of the first advertisement is related to a first application;
sending, by the electronic device, first advertisement interaction information and an open identifier to a first server, wherein the open identifier is generated based on a device identifier of the electronic device and an advertiser identifier, and the advertiser identifier is associated with the first advertisement;
installing, by the electronic device, the first application; and
sending, by the electronic device, advertisement conversion information and the open identifier to a second server, wherein the advertisement conversion information and the first advertisement interaction information are used to perform advertisement attribution.

12. The method according to claim 11, wherein after the electronic device installs the first application, when the electronic device runs the first application, the electronic device sends the advertisement conversion information and the open identifier to the second server.

13. The method according to claim 11 or 12, wherein the electronic device comprises an advertisement module, and the displaying, by the electronic device, content of a first advertisement comprises:
obtaining, by the electronic device, first advertisement information from the first server by using the advertisement module, wherein the first advertisement information comprises the content of the first advertisement and the advertiser identifier; and
displaying, by the electronic device, the content of the first advertisement based on the first advertisement information.

14. The method according to claim 13, wherein the advertisement module is a third-party advertisement module.

15. The method according to any one of claims 11 to 14, wherein the electronic device comprises a management module, and before the sending, by the electronic device, first advertisement interaction information and an open identifier to a first server, the method further comprises:
obtaining, by the electronic device, the device identifier of the electronic device and the advertiser identifier by using the management module, and generating the open identifier by using the management module.

16. The method according to any one of claims 11 to 15, wherein the open identifier is generated based on the device identifier of the electronic device and the advertiser identifier by using an encryption algorithm.

17. The method according to any one of claims 11 to 16, wherein the installing, by the electronic device, the first application comprises:
obtaining, by the electronic device, an installation package of the first application and installing the first application in response to an operation of tapping the first advertisement by a user.

18. The method according to claim 17, wherein the installation package of the first application comprises the advertiser identifier.

19. The method according to any one of claims 11 to 18, wherein the electronic device displays the content of the first advertisement in at least one of the following manners:
displaying, by the electronic device, the content of the first advertisement on a leftmost screen;
displaying, by the electronic device, the content of the first advertisement on a startup interface of a second application;
displaying, by the electronic device, the content of the first advertisement on a pause interface during video play;
displaying, by the electronic device, the content of the first advertisement on a pop-up interface;
displaying, by the electronic device, the content of the first advertisement on an application store interface;
displaying, by the electronic device, the content of the first advertisement on an application recommendation interface; and
displaying, by the electronic device, the content of the first advertisement by using a use interface of a third application.

20. An electronic device, comprising modules configured to implement the method according to any one of claims 11 to 19.

21. An electronic device, comprising one or more processors and one or more memories, wherein the one or more memories store one or more computer programs, the one or more computer programs comprise instructions, and when the instructions are executed by the one or more processors, the method according to any one of claims 11 to 19 is performed.

22. A chip, wherein the chip comprises a processor and a communication interface, the communication interface is configured to: receive a signal, and transmit the signal to the processor, and the processor processes the signal, so that the method according to any one of claims 11 to 19 is performed.

23. A computer-readable storage medium, wherein the computer-readable storage medium stores computer instructions, and when the computer instructions are run on a computer, the method according to any one of claims 11 to 19 is performed.

24. A computer program product comprising instructions, wherein when the computer program product runs on a computer, the computer is enabled to perform the method according to any one of claims 11 to 19.
